# FASCICULE DE BREVET EUROPEEN

(11) **EP 0 622 168 B1**
(45) Date de publication et mention de la délivrance du brevet: **10.09.1997**
(21) Numéro de dépôt: 94400674.1
(22) Date de dépôt: 29.03.1994
(51) Int. Cl.: B29C 63/00, B27D 5/00, F16B 11/00

(54) **Procédé et machine de collage d'une bordure de protection adhésive sur le bord d'un panneau multicouche tel qu'un panneau de protection thermique d'engin spatial**
Verfahren und Vorrichtung zum Verkleben eines Kantenschutzklebebandes auf dem Rand einer mehrschichtigen Verbundplatte, wie eine Wärmeschutzplatte eines Raumfahrzeuges
Method and device for glueing an adhesive protection strip on the edge of a multilayered panel, such as a thermic protection panel of a spacecraft

(30) Priorité: 31.03.1993 FR 9303745
(43) Date de publication de la demande: 02.11.1994
(73) Titulaire: AEROSPATIALE Société Nationale Industrielle, 75781 Paris Cédex 16 (FR)
(72) Inventeur: Mauduit, Daniel André, F-83370 Saint Aygulf (FR); Sisani, Gérard, F-06150 Cannes la Bocca (FR)
(74) Mandataire: Poulin, Gérard

(56) Documents cités:
- EP-A- 0 072 779
- GB-A- 998 150
- GB-A- 1 320 591

## Description

L'invention concerne un procédé permettant de coller une bordure de protection adhésive sur un bord droit d'un panneau multicouche tel qu'un panneau destiné à servir de protection thermique sur un engin spatial (satellite, station orbitale, etc.). L'invention a aussi pour objet une machine mettant en oeuvre ce procédé.

Les parties sensibles des engins spatiaux tels que les satellites ou les stations orbitales sont habituellement recouvertes de panneaux ou matelas de protection thermique multicouche. Ces panneaux protègent les parties sensibles précitées des variations de température extrêmes auxquelles elles sont soumises, selon qu'elles sont orientées vers le soleil ou non. De tels panneaux de protection thermique sont habituellement appelés "super isolation". Ils sont formés d'un empilement de feuilles extrêmement minces, réalisées pour la plupart en matériaux plastiques tels que du "Milan", du "Kapton" ou du "Dacron" (Marques déposées), métallisés ou non. Le nombre de couches dépend de la protection thermique que l'on désire obtenir.

Compte tenu de la nature de certains des matériaux situés à l'intérieur de l'empilement formant un tel panneau multicouche, il est essentiel de protéger la tranche du panneau, afin qu'elle ne soit pas exposée directement au vide ou au rayonnement solaire. En effet, une telle exposition aurait pour effet de désagréger rapidement certains matériaux, ce qui rendrait immédiatement inopérants les systèmes optiques embarqués sur l'engin. Cela n'est évidemment pas admissible, compte tenu du prix des engins spatiaux.

Par ailleurs, il est important que la protection de la tranche du panneau soit réalisée sans création de ponts thermiques entre les différentes feuilles qui le constituent, faute de quoi l'efficacité de la protection thermique pourrait être sensiblement réduite.

La protection de la tranche des panneaux multicouche de ce type est habituellement assurée en collant le long de chacun des bords du panneau une bordure de protection adhésive. Plus précisément, cette bordure de protection adhésive est formée d'une bande adhésive de grande largeur, au milieu de laquelle est collée une bande centrale non adhésive. On délimite ainsi deux zones latérales adhésives qui s'étendent sur toute la longueur de la bordure et qui sont destinées à être collées sur les faces opposées du panneau, le long du bord considéré. La bande centrale non adhésive est destinée à être placée en face de la tranche du panneau. La bordure de protection adhésive ainsi formée est stockée sous forme bobinée, chacune des deux zones latérales adhésives étant recouverte d'un protecteur anti-adhésif.

Dans l'état actuel de la technique, un premier protecteur anti-adhésif est enlevé, puis la zone latérale adhésive correspondante est collée manuellement sur le panneau. Celui-ci est ensuite retourné, et le deuxième protecteur anti-adhésif est à son tour enlevé pour permettre le collage de la zone latérale adhésive correspondante de la bordure de protection sur l'autre face du panneau.

Afin d'éviter la création de ponts thermiques entre les différentes feuilles du panneau, il est essentiel que le collage de la bordure de protection soit réalisé sans former de plis sur les bords de ces feuilles. Cela est très difficile à obtenir manuellement, du fait de la très faible épaisseur des feuilles constituant les panneaux et de la présence d'électricité statique dans ces feuilles, compte tenu des matériaux qui les composent. En effet, lorsque la deuxième zone latérale adhésive de la bordure de protection est repliée sur le panneau, les différentes feuilles constituant ce dernier ont tendance à être attirées par cette zone et à venir s'y coller dans une position non satisfaisante. Pour que le collage soit satisfaisant, il est donc nécessaire de découper la bordure de protection en tronçons de faible longueur (toujours moins de 100 mm, par exemple environ 50 mm), puis de les mettre en place successivement le long du bord du panneau.

Le collage manuel de la bordure de protection sur les bords des panneaux multicouche constitue par conséquent une opération longue et fastidieuse, dont le coût est élevé puisqu'il représente à lui seul environ 50 % à 80 % du coût du panneau terminé, selon la complexité de sa forme.

Comme l'illustre le document FR-A-2 618 771, il est connu de coller une bande de renfort perforée et auto-adhésive le long du bord d'une feuille de papier, sur une face de cette feuille, au moyen d'un appareil de pose facilitant le positionnement relatif entre la bande de renfort et la feuille. Cependant, l'appareil décrit dans ce document ne permet pas de résoudre le problème posé par le collage d'une bordure de protection adhésive sur les deux faces d'un panneau multicouche, le long du bord de ce panneau.

Par ailleurs, le document GB-A-1 320 591 enseigne de protéger le bord d'une feuille métallique, destinée à former le corps d'une boîte de conserve, au moyen d'une bande adhésive. La bande est collée sur une première face de la feuille et repliée à angle droit par une brosse rotative dont l'axe est sensiblement parallèle à la direction d'avance de la feuille. Une brosse fixe presse la partie repliée de la bande contre la face opposée de la feuille métallique.

Le document EP-A-0 072 779 propose également d'appliquer une bande adhésive le long du bord d'une plaque métallique se déplaçant en continu. Un protecteur est décollé de la bande juste avant qu'elle ne soit appliquée sur le bord de la plaque. L'application de la bande sur les deux faces de la plaque est assurée progressivement par un galet en forme de diabolo, une goulotte en V qui se referme progressivement, et deux galets cylindriques.

L'invention a précisément pour objet un procédé permettant de coller une bordure de protection adhésive sur le bord droit d'un panneau multicouche tel qu'un panneau de protection thermique d'engin spatial, sur une longueur pratiquement illimitée, sans risque de création de ponts thermiques à l'intérieur du panneau, et de façon particulièrement simple et peu coûteuse.

Conformément à l'invention, ce résultat est obtenu au moyen d'un procédé de collage d'une bordure de protection adhésive sur un bord droit d'un panneau multicouche, la bordure comportant une bande centrale mon adhésive et deux zones latérales adhésives les étapes suivantes :
- collage de la première zone latérale adhésive de la bordure sur une première face du panneau, le long du bord droit, par dépose de cette première face du panneau sur un plan de travail, déroulement de la bordure à partir d'une bobine de stockage, enlèvement d'un premier protecteur anti-adhésif recouvrant la première zone latérale adhésive, amenée de cette dernière entre le plan de travail et la première face du panneau au travers d'une encoche formée dans le bord droit du plan de travail, de telle sorte qu'elle soit au contact de cette première face le long du bord droit du panneau, et avance simultanée du panneau et de la première zone latérale adhésive sur le plan de travail ;
- application d'une pression sur le panneau, le long du bord droit ;
- pliage de la bordure de telle sorte que la deuxième zone latérale adhésive de cette dernière, recouverte d'un deuxième protecteur anti-adhésif, soit repliée sur la face opposée du panneau ; et
- enlèvement du deuxième protecteur anti-adhésif en maintenant une pression sur le panneau, le long du bord droit.

Dans ce procédé, étant donné que la première zone latérale adhésive de la bordure de protection est collée sur la première face du panneau en faisant avancer ce dernier dans la direction définie par son bord droit, le collage de cette première zone latérale adhésive est effectué sans difficulté quelle que soit sa longueur. Par ailleurs, étant donné que la bordure de protection adhésive est repliée sur le panneau alors qu'une pression est appliquée sur celui-ci et que le protecteur anti-adhésif recouvrant la deuxième zone latérale adhésive de la bordure n'a pas encore été enlevé, le collage de cette deuxième zone est également réalisé sans difficulté, quelle que soit sa longueur, lors de l'enlèvement progressif du deuxième protecteur anti-adhésif.

Avantageusement, le bord droit du panneau est guidé lors de son avance sur le plan de travail.

Dans une première forme de réalisation de l'invention, le pliage de la bordure est réalisé après la découpe de ses extrémités, le panneau étant alors immobile sur le plan de travail.

Au contraire, selon une deuxième forme de réalisation de l'invention, le pliage de la bordure est réalisé progressivement lors de l'avance du panneau sur le plan de travail, après le collage de la première zone latérale adhésive et avant la découpe des extrémités de la bordure.

L'invention a aussi pour objet une machine de collage d'une bordure de protection adhésive sur un bord droit d'un panneau multicouche, la bordure comportant une bande centrale non adhésive et deux zones latérales adhésives, cette machine comprenant:
- un plan de travail apte à recevoir le panneau ;
- une bobine de stockage de la bordure de protection adhésive, placée en dessous du plan de travail ;
- un moyen d'enlèvement d'un premier protecteur anti-adhésif recouvrant la première zone latérale adhésive de la bordure, à la sortie de la bobine de stockage ;
- une fente formée dans le plan de travail, pour le passage de la première zone latérale sur le plan de travail, en un emplacement situé sous une première face du panneau, le long du bord droit ;
- des moyens d'application de pression sur le panneau reposant sur le plan de travail, le long du bord droit ;
- des moyens de pliage de la bordure sur la face opposée du panneau ; et
- un moyen d'enlèvement d'un deuxième protecteur anti-adhésif recouvrant la deuxième zone latérale adhésive de la bordure.

Dans la première forme de réalisation de l'invention, les moyens de pliage de la bordure comprennent une charnière de pliage articulée sur le plan de travail, en aval de ladite fente. Les moyens d'application de pression comprennent alors une règle apte à être placée sur le panneau, le long de son bord droit, en face de la charnière de pliage.

Dans la deuxième forme de réalisation de l'invention, les moyens de pliage de la bordure comprennent un guide de pliage fixé au plan de travail, de façon à assurer un pliage progressif de la bordure lors de son avance sur le plan de travail. De plus, les moyens de pliage comprennent un galet de pliage qui presse la deuxième zone latérale adhésive de la bordure contre la face opposée du panneau, en aval du guide de pliage et en amont du moyen d'enlèvement du deuxième protecteur anti-adhésif.

Dans ce dernier cas, la machine comprend de plus un galet de collage qui presse la deuxième zone latérale adhésive de la bordure contre la face opposée du panneau, en aval du moyen d'enlèvement du deuxième protecteur anti-adhésif. Des moyens de découpe sont alors placés en aval du galet de collage.

Dans la deuxième forme de réalisation de l'invention, les moyens d'application de pression comprennent avantageusement un patin presseur placé au-dessus du plan de travail, le long du bord droit du panneau, et s'étendant vers l'aval jusqu'à proximité d'une extrémité aval du guide de pliage.

On décrira à présent, à titre d'exemples non limitatifs, deux formes de réalisation de l'invention, en se référant aux dessins annexés, dans lesquels :
- la figure 1 est une vue en perspective, partiellement en coupe, représentant un bord droit d'un panneau multicouche tel qu'un panneau de protection thermique d'engin spatial, revêtu d'une bordure de protection adhésive ;
- la figure 2 est une vue en perspective illustrant une première phase de mise en oeuvre d'une machine conforme à l'invention, lors du collage d'une bordure de protection sur le bord droit d'un panneau analogue à celui de la figure 1 ;
- la figure 3 est une vue en perspective illustrant une deuxième phase de mise en oeuvre de la machine de la figure 2 ; et
- la figure 4 est une vue en perspective représentant une deuxième forme de réalisation d'une machine de collage conforme à l'invention.

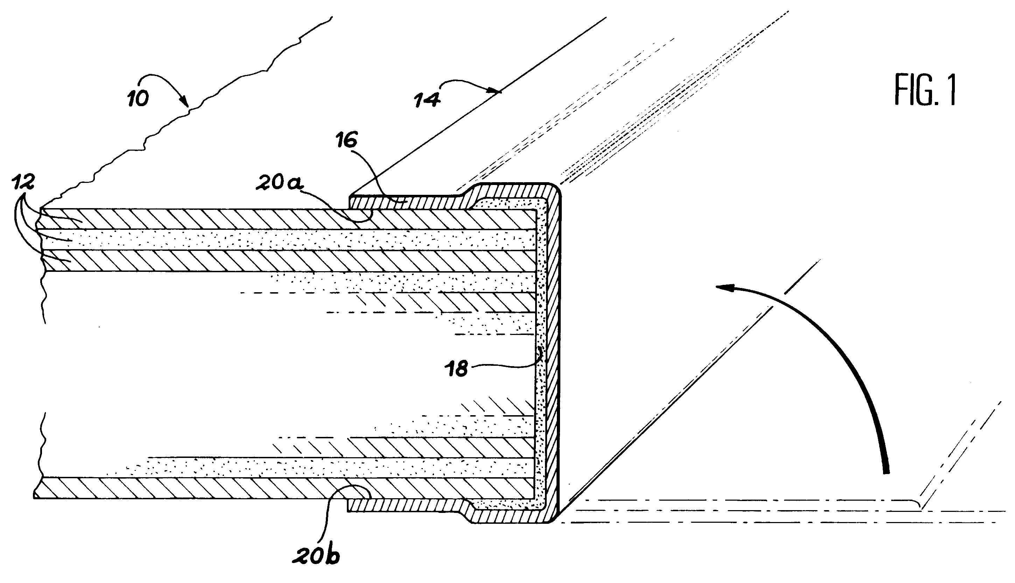

Sur la figure 1, la référence 10 désigne de façon générale un panneau multicouche constitué par un empilement de feuilles 12 de très faible épaisseur. Lorsque le panneau 10 est un panneau de "super isolation" destiné à assurer la protection thermique de certaines parties sensibles d'un engin spatial tel qu'un satellite ou une station orbitale, les feuilles 12 qui le constituent peuvent notamment comprendre des feuilles de Kapton (Marque déposée) aluminisées sur au moins une face, des feuilles de Mylar (Marque déposée) aluminisées sur leurs deux faces, et des feuilles de Dacron (Marque déposée) ou de tissu glace, agencées de façon alternée. Le nombre de feuilles varie selon la qualité de l'isolation thermique que l'on désire obtenir et la nature des matériaux utilisés.

Compte tenu de la nature des matériaux constituant certaines des feuilles 12 de l'empilement, l'exposition de ces feuilles au vide et au rayonnement solaire sur le bord périphérique du panneau aurait pour conséquence la destruction rapide de ces feuilles, au moins dans la région périphérique du panneau. Cela se traduirait par une perte d'efficacité de la protection thermique et surtout par une pollution inacceptable qui rendrait rapidement inopérants les systèmes optiques embarqués sur l'engin.

Pour éviter ce risque, on a l'habitude de recouvrir les bords des panneaux 10 d'une bordure de protection adhésive 14, comme l'illustre schématiquement la figure 1.

Cette bordure de protection adhésive 14 comprend une bande adhésive 16, dont la largeur (par exemple, 25 mm) est sensiblement plus grande que l'épaisseur (par exemple, 4 à 5 mm) du panneau 10, ainsi qu'une bande centrale non adhésive 18 dont la largeur (par exemple, 5 mm) est égale ou légèrement supérieure à l'épaisseur du panneau 10. La bande adhésive 16 ainsi que la bande centrale non adhésive 18 peuvent notamment être réalisées en Kapton (Marque déposée). La bande centrale non adhésive 18 est collée par avance au centre de la bande adhésive 16, de telle sorte que cette dernière présente deux zones latérales adhésives 20a et 20b de part et d'autre de la zone centrale non adhésive que constitue la bande 18. Ces zones latérales adhésives 20a et 20b sont prévues pour être collées sur les faces opposées du panneau 10, le long du bord droit de ce panneau que l'on désire protéger, comme l'illustre la figure 1.

Comme on l'a déjà mentionné, la mise en place de la bordure de protection adhésive 14 sur les bords des panneaux 10 s'effectuait jusqu'à présent manuellement. Compte tenu de la très faible épaisseur des feuilles 12 et du caractère électrostatique des matériaux constituant certaines de ces feuilles, la mise en place manuelle de la bordure de protection adhésive 14 constituait donc une opération longue et délicate nécessitant la pose de tronçons successifs de très faible longueur (moins de 100 mm). En effet, la pose de bordures de protection adhésives de plus grande longueur aurait conduit à des plissements des feuilles 12 créant des ponts thermiques ne permettant pas d'obtenir la protection thermique désirée.

Conformément à l'invention, la bordure de protection adhésive 14 est collée sur les bords droits des panneaux tels que le panneau 10 d'une manière telle qu'une longueur illimitée de bordure peut être posée d'un seul tenant sans craindre la formation de ponts thermiques.

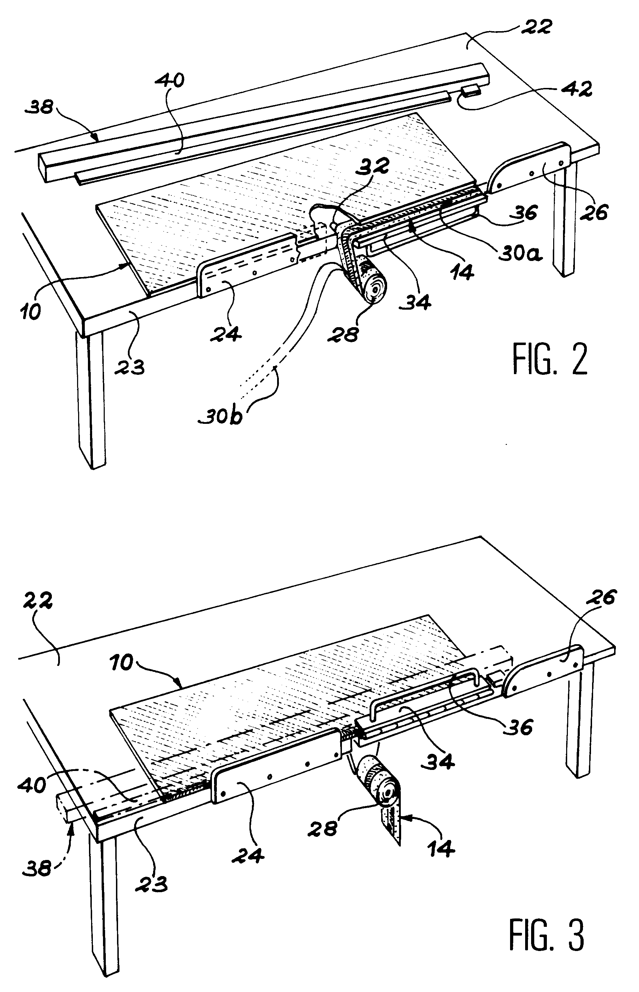

Une première machine mettant en oeuvre le procédé de collage selon l'invention va à présent être décrite en se référant aux figures 2 et 3.

La machine illustrée sur les figures 2 et 3 comprend un plan de travail 22, de préférence horizontal, dont un bord droit 23 porte deux guides 24 et 26 qui font saillie vers le haut, respectivement à l'entrée et à la sortie du plan de travail.

Le guide d'entrée 24 est situé à l'extrémité d'entrée de la machine, placée du côté gauche sur les figures 2 et 3. Il permet de guider le bord droit du panneau 10 que l'on désire revêtir de la bordure de protection adhésive 14. Cette bordure de protection est enroulée sur une bobine de stockage 28 dont l'axe horizontal 30 est situé en dessous du plan de travail 22 et orienté selon une direction orthogonale au bord droit 23. Sur la bobine 28, chacune des zones latérales adhésives 20a et 20b de la bordure 14 est recouverte d'un protecteur anti-adhésif 30a et 30b.

Par rapport au bord droit 23 du plan de travail 22, la bobine 28 est disposée latéralement de telle sorte que la zone latérale adhésive 20b de la bordure de protection adhésive 14 se trouve située sous le plan de travail 22 alors que le reste de la bordure de protection adhésive 14, (c'est-à-dire la bande centrale non adhésive 18 ainsi que l'autre zone latérale adhésive 20a) est situé au-delà du bord droit 23. En outre, la bobine 28 est située en dessous d'une encoche 32 formée dans le bord droit 23 du plan de travail 22, juste en aval du guide 24 par rapport au sens d'introduction du panneau 10.

Compte tenu des deux caractéristiques qui viennent d'être décrites, la bordure de protection adhésive 14 peut être déroulée de la bobine 28 au travers de l'encoche 32, de telle sorte que la zone latérale adhésive 20b repose sur le plan de travail 22 en aval de l'encoche 32, le long du bord droit 23 de ce plan, la face adhésive de cette zone 20b étant alors tournée vers le haut. Avant que la bordure de protection adhésive 14 ne soit amenée dans cette position, le protecteur anti-adhésif 30b qui recouvre la zone latérale adhésive 20b est décollé de celle-ci, en dessous du plan de travail 22, comme l'illustre la figure 2.

Dans la partie du plan de travail 22 située en aval de l'encoche 32 par rapport à la direction d'introduction du panneau 10, une charnière de pliage 34, mieux visible sur la figure 3, est articulée sur le bord 23 du plan de travail 22, de façon à pouvoir être repliée sur ce dernier, par exemple en agissant sur une poignée 36. La charnière de pliage 34 s'étend vers l'avant jusqu'au guide de sortie 26.

La machine de collage illustrée sur les figures 2 et 3 comprend de plus une règle 38 dont la longueur est au moins égale à celle de la charnière 34 et, de préférence, proche de celle du plan de travail 22. Cette règle 38 comporte sur l'un de ses côtés un linguet 40 de très faible épaisseur, prévu pour reposer sur le panneau 10 placé sur le plan de travail 22 et apte à être placé le long du bord 23 de ce dernier. L'épaisseur du linguet 40 est suffisamment faible pour que la charnière 34 puisse alors être rabattue sur le plan de travail 22, comme l'illustre la figure 3.

Le linguet 40 de la règle 38 comporte, à proximité de son extrémité prévue pour être tournée vers l'avant de la machine, une fenêtre 42 (figure 2) dont la fonction apparaîtra par la suite.

Le collage d'une bordure de protection adhésive 14 sur un bord droit d'un panneau multicouche 10 à l'aide de la machine qui vient d'être décrite en se référant aux figures 2 et 3 s'effectue de la façon suivante.

La règle 38 n'étant pas placée sur la partie utile du plan de travail 22, l'opérateur dépose le panneau 10 sur l'extrémité gauche d'entrée du plan de travail, de telle sorte que le bord droit qui doit être revêtu de la bordure de protection adhésive 14 soit placé le long du bord droit 23 du plan de travail, en appui contre le guide d'entrée 24. Cette mise en place est réalisée de telle sorte que le bord du panneau 10 tourné vers l'avant de la machine, c'est-à-dire vers la droite en considérant les figures 2 et 3, ne recouvre pas l'encoche 32 mais soit situé à proximité de celle-ci.

L'opérateur déroule alors une petite longueur de la bordure de protection adhésive 14 à partir de la bobine 28, au travers de l'encoche 32, après avoir pris soin de retirer, en dessous du plan de travail, le protecteur anti-adhésif 30b qui recouvre la zone latérale adhésive 20b. Pour que ce retrait s'effectue ensuite de façon automatique lors du déroulement de la bordure de protection adhésive, l'extrémité du protecteur anti-adhésif 30b peut être reliée à un système de mise en tension (non représenté). On déroule ainsi, au-dessus du plan de travail 22 et en aval de l'encoche 32, une longueur de bordure de protection adhésive 14 limitée à quelques centimètres. Afin de maintenir la bordure de protection adhésive en tension à partir de la bobine 28, son extrémité située au-dessus du plan de travail 22 peut, elle aussi, être reliée à un système de mise en tension tel qu'un contrepoids.

Lorsque ces opérations préparatoires sont terminées, l'opérateur fait avancer le panneau 10 sur le plan de travail 22 en maintenant son bord droit à protéger en contact avec le guide 24. Dès que la face du panneau 10 qui repose sur le plan de travail 22 dépasse l'encoche 32, la partie de cette face adjacente au bord droit à protéger arrive sur la zone latérale adhésive 20b de la bordure de protection 14 et se colle progressivement sur cette zone latérale adhésive, en entraînant avec elle la bordure 14, au fur et à mesure de son avance sur le plan de travail 22.

Etant donné que le panneau 10 comme la bordure de protection adhésive 14 avancent simultanément dans la même direction sur le plan de travail 22, le collage s'effectue progressivement sans difficulté, sur une longueur qui n'est limitée dans ce cas que par la longueur de la charnière 34. Cette opération peut être réalisée manuellement, ou à l'aide d'un mécanisme de traction du panneau non illustré sur les figures. Elle se poursuit jusqu'à ce que le bord avant du panneau 10 affleure l'extrémité avant de la charnière 34. On se trouve alors dans la position illustrée sur la figure 2.

La bordure de protection adhésive 14 est alors coupée en face de l'encoche 32, par tout système de découpe approprié, afin que la partie de la bordure qui dépasse du bord à protéger du panneau 10 puisse être repliée sur la face supérieure de ce dernier.

Pour que cette opération puisse être réalisée sans risque que les feuilles constituant le panneau multicouche 10 ne fassent des plis entraînant la création de pont thermiques, on place alors sur le panneau 10, le long de son bord droit à protéger, la règle 38, alors que le protecteur anti-adhésif 30a est toujours placé sur la zone latérale adhésive 20a de la bordure de protection 14. La position alors occupée par la règle 38 est illustrée en traits discontinus sur la figure 3. Dans cette position, le linguet 40 est placé le long du bord droit 23 du plan de travail.

L'opérateur replie alors la charnière 34 sur le linguet 40 en s'aidant de la poignée 36. La bordure de protection adhésive 14 est ainsi préformée dans la position qu'elle doit finalement occuper après son collage.

L'opérateur ramène alors la charnière 34 dans sa position initiale ouverte et décolle de la zone latérale adhésive 20a de la bordure de protection 14 l'extrémité du protecteur anti-adhésif 30a. Plus précisément, l'opérateur replie cette extrémité sensiblement à 90° par rapport au bord droit 23 du plan de travail 22, sur une longueur relativement faible, mais néanmoins suffisante pour que l'extrémité du protecteur dépasse légèrement de la charnière 34 lorsque celle-ci sera à nouveau repliée sur la face supérieure du panneau 10. La partie de la zone latérale adhésive 20a de la bordure de protection 14 qui n'est plus recouverte de son protecteur anti-adhésif 30a est alors située en face de la fenêtre 42 du linguet.

La charnière 34 est ensuite repliée sur la face supérieure du panneau 10 et sur le linguet 40, de telle sorte que la partie de la zone latérale adhésive 20a dépourvue de son protecteur anti-adhésif colle sur le panneau 10 à travers la fenêtre 42 du linguet 40.

La règle 38 est ensuite retirée doucement par l'opérateur, alors que la charnière 34 reste repliée somme l'illustre la figure 3.

Pour terminer le collage, l'opérateur n'a plus qu'à saisir l'extrémité du protecteur anti-adhésif 30a qui dépasse de la charnière 34 et à tirer sur cette extrémité tout en pressant sur la charnière. La zone latérale adhésive 20a se colle alors progressivement sur la face supérieure du panneau 10, sans qu'il y ait création de plis parasites dans les feuilles constituant ce panneau.

Si la longueur du bord droit du panneau 10 que l'on désire protéger est supérieure à la longueur de la charnière 34, comme c'est le cas sur les figures 2 et 3, l'opération qui vient d'être décrite peut être répétée autant de fois que nécessaire, jusqu'à ce que la totalité du bord du panneau soit revêtue d'une bordure de protection. Il est à noter cependant que l'utilisation d'une charnière 34 de plus grande longueur que celle qui est illustrée sur les figures peut permettre de protéger chacun des bords des panneaux 10 couramment utilisées en une seule opération.

La machine de collage qui vient d'être décrite en se référant aux figures 2 et 3 nécessite des interventions manuelles, de telle sorte qu'elle n'est utilisable que dans le cadre d'une fabrication de panneaux multicouche en nombre très limité. Cependant, elle procure déjà, par rapport au procédé de collage traditionnel, des avantages essentiels concernant la durée et le coût de l'opération.

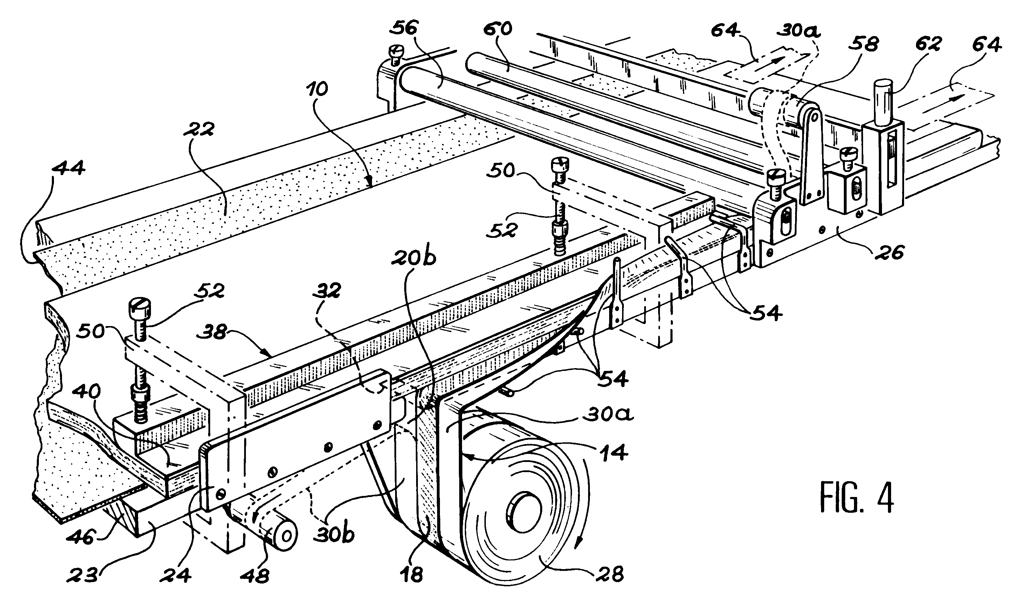

On décrira à présent, en se référant à la figure 4, une forme de réalisation préférentielle d'une machine de collage mettant également en oeuvre le procédé selon l'invention. Cette machine permet d'envisager le collage d'une bordure de protection adhésive pratiquement en continu sur les bords droits de panneaux multicouche 10 placés les uns derrière les autres sur la machine.

Dans la forme de réalisation illustrée sur la figure 4, le plan de travail 22 est matérialisé par la face supérieure d'un tapis roulant 44 apte à se déplacer sur une table horizontale 46. Le bord droit à protéger de chacun des panneaux 10 placés sur le tapis roulant 44 est disposé le long du bord droit 23 de la table 46 et guidé à l'entrée et à la sortie de celle-ci par un guide d'entrée 24 et par un guide de sortie 26.

Comme dans la première forme de réalisation décrite en se référant aux figures 2 et 3, la machine de la figure 4 comporte une bobine de stockage 28 sur laquelle est enroulée la bordure de protection adhésive 14. L'axe horizontal de la bobine 28 est orthogonal au bord droit 23 de la table 46. Cette bobine 28 est placée en dessous de la table 46, en face d'une encoche 32 formée dans le bord 23, de telle sorte que la zone latérale adhésive 20b de la bordure de protection 14 puisse venir se placer sur la face supérieure de la table 46, le long du bord 23, à côté du tapis roulant 44 et à l'avant de l'encoche 32. La face adhésive de la zone latérale adhésive 20b, qui est tournée vers le haut lorsqu'elle arrive sur la face supérieure de la table 46, est alors débarrassée de son protecteur anti-adhésif 30b, qui est décollé de la bordure 14 en dessous de la table 46, et par exemple réenroulé sur un mandrin 48.

La machine de collage illustrée sur la figure 4 comprend de plus un patin presseur 38 qui est appliqué en permanence sur la face supérieure des panneaux 10 placés sur le plan de travail 22, le long du bord droit 23 de la table 46. Dans sa partie la plus proche du bord 23, le patin presseur 38 comporte un linguet 40 de moindre épaisseur. Le patin presseur 38 peut notamment être relié à la table 46 par des potences 50. Un système 52 élastique et réglable est avantageusement prévu entre chacune des potences 50 et le patin presseur 38, pour permettre de plaquer ce dernier sur la face supérieure des panneaux 10 avec une force sensiblement constante, quelle que soit l'épaisseur de ces panneaux.

En aval de l'encoche 32 par rapport à la direction d'avance du tapis roulant 44, le bord droit 23 de la table 46 porte un guide de pliage 54 permettant de rabattre progressivement sur le linguet 40 la partie de la bordure de protection adhésive 14 qui fait saillie au-delà du bord 23, au fur et à mesure que les panneaux 10 ainsi que la bordure de protection 14 avancent sur le plan de travail 22. Dans la forme de réalisation illustrée sur la figure 4, ce guide de pliage comprend des doigts 54. Cependant, ce guide de pliage pourrait prendre toute autre forme, et notamment la forme d'une goulotte continue.

Immédiatement en aval du guide de pliage 54 et de l'extrémité adjacente du patin presseur 38, le pliage de la bordure de protection adhésive 14 est achevé par un galet presseur 56 supporté par le guide de sortie 26. Ce galet presseur 56, d'axe horizontal, est placé au-dessus du plan de travail 22 et disposé transversalement par rapport à la direction d'avance du tapis roulant 44. Il applique une pression contrôlée sur la face supérieure de chacun des panneaux 10 qui défilent sur ce tapis, ainsi que sur la partie de la bordure de protection adhésive 14 repliée sur cette face supérieure par le guide de pliage 54. Cette pression peut avantageusement être réglée, notamment pour tenir compte de l'épaisseur des panneaux 10.

Immédiatement en aval du galet presseur 56 par rapport à la direction d'avance du tapis roulant 44, le guide de sortie 26 supporte aussi, sensiblement au-dessus du plan de travail 22, un mandrin 58 sur lequel vient s'enrouler le protecteur anti-adhésif 30a. Il est à noter que ce protecteur n'est enlevé qu'à ce niveau et recouvre la zone latérale adhésive 20a de la bordure de protection 14 repliée sur la face supérieure du panneau 10 jusqu'au galet presseur 56. De même que le mandrin 48 servant à l'enroulement du protecteur anti-adhésif 30b, le mandrin 58 peut être entraîné par un moteur.

Immédiatement en aval du mandrin 58 servant à ôter le protecteur anti-adhésif 30a de la zone latérale adhésive 20a de la bordure de protection 14, le collage de cette bordure est achevé au moyen d'un galet presseur de collage 60 supporté par le guide de sortie 26. Ce galet presseur de collage a sensiblement les mêmes caractéristiques que le galet presseur de pliage 56, c'est-à-dire qu'il est placé au-dessus du plan de travail 22, selon un axe horizontal, et orienté transversalement par rapport à la direction d'avance du tapis roulant 44, de façon à appliquer une force prédéterminée sur la face supérieure des panneaux 10 et sur la partie de la bordure de protection adhésive 14 rabattue sur cette face. Lorsque les panneaux 10 sortent du galet presseur 60, le collage de la bordure de protection adhésive 14 est achevé.

Enfin, le bord 23 de la table 46 supporte, en aval du galet presseur de collage 60, un dispositif 62 de découpe, de préférence motorisé. L'actionnement de ce dispositif de découpe 62 permet de couper la bordure de protection adhésive 14 au-delà du bord arrière d'un ensemble de panneaux 10.

L'amorçage de la machine illustrée sur la figure 4 s'effectue d'une manière analogue à celle qui a été décrite pour la machine des figures 2 et 3. Dès que la zone latérale adhésive 20b de la bordure de protection adhésive 14 commence à se coller en dessous du panneau 10, la bordure de protection est entraînée avec le panneau par le tapis roulant 44. Si nécessaire, des bandes de mises en tension telles que 64 peuvent être collées à l'avant de chacun des panneaux, afin d'éviter que les feuilles supérieures des panneaux ne se replient lorsqu'elles passent sous les galets presseurs 56 et 60 ou que les panneaux ne se mettent en biais lors de leur avance sur la machine. Un système analogue peut être utilisé pour mettre en tension l'extrémité avant de la bordure de protection adhésive 14.

La description qui précède montre que le procédé de collage conforme à l'invention peut être mis en oeuvre de façon plus ou moins automatisée selon les cadences de production désirées. Cependant, ce procédé permet dans tous les cas de coller des bordure de protection adhésives sur des longueurs pratiquement illimitées sans risquer la création de ponts thermiques à l'intérieur des panneaux. Il en résulte un gain de temps et une économie considérable par rapport aux techniques utilisées jusqu'à ce jour pour effectuer les mêmes opérations.

## Revendications

1. Procédé de collage d'une bordure de protection adhésive (14) sur un bord droit d'un panneau multicouche (10), la bordure (14) comportant une bande centrale (18) non adhésive et deux zones latérales (20a, 20b) adhésives, ce procédé comprenant les étapes suivantes :
- collage de la première zone latérale adhésive (20b) de la bordure (14) sur une première face du panneau, le long du bord droit, par dépose de cette première face du panneau (10) sur un plan de travail (22), déroulement de la bordure à partir d'une bobine de stockage (28), enlèvement d'un premier protecteur anti-adhésif (30b) recouvrant la première zone latérale adhésive, amenée de cette dernière entre le plan de travail et la première face du panneau au travers d'une encoche (32) formée dans le bord droit (23) du plan de travail (22), de telle sorte qu'elle soit au contact de cette première face le long du bord droit du panneau, et avance simultanée du panneau et de la première zone latérale adhésive sur le plan de travail ;
- application d'une pression sur le panneau (10), le long du bord droit ;
- pliage de la bordure (14) de telle sorte que la deuxième zone latérale adhésive (20a) de cette dernière, recouverte d'un deuxième protecteur anti-adhésif (30a), soit repliée sur la face opposée du panneau ; et
- enlèvement du deuxième protecteur anti-adhésif (30a) en maintenant une pression sur le panneau, le long du bord droit.

2. Procédé selon la revendication 1, caractérisé par le fait que le bord droit du panneau (10) est guidé lors de son avance sur le plan de travail (22).

3. Procédé selon l'une quelconque des revendications 1 et 2, caractérisé par le fait que le pliage de la bordure (14) est réalisé après découpe de ses extrémités, le panneau (10) étant immobile sur le plan de travail.

4. Procédé selon l'une quelconque des revendications 1 et 2, caractérisé par le fait que le pliage de la bordure (14) est réalisé progressivement lors de l'avance du panneau (10) sur le plan de travail (22), après le collage de la première zone latérale adhésive (20b).

5. Machine de collage d'une bordure de protection adhésive (14) sur un bord droit d'un panneau multicouche (10), la bordure (14) comportant une bande centrale (18) non adhésive et deux zones latérales (20a, 20b) adhésives, cette machine comprenant:
- un plan de travail (22) apte à recevoir le panneau ;
- une bobine de stockage (28) de la bordure de protection adhésive (14), placée en dessous du plan de travail ;
- un moyen d'enlèvement d'un premier protecteur anti-adhésif (30b) recouvrant la première zone latérale adhésive (20b) de la bordure, à la sortie de la bobine de stockage ;
- une fente (32) formée dans le plan de travail (22), pour le passage de la première zone latérale sur le plan de travail, en un emplacement situé sous une première face du panneau, le long du bord droit ;
- des moyens d'application de pression (38) sur le panneau reposant sur le plan de travail, le long du bord droit ;
- des moyens de pliage (34,54) de la bordure sur la face opposée du panneau ; et
- un moyen d'enlèvement d'un deuxième protecteur anti-adhésif (30a) recouvrant la deuxième zone latérale adhésive (20a) de la bordure.

6. Machine selon la revendication 5, caractérisée par le fait qu'elle comprend un guide latéral (24) contre lequel est placé le bord droit du panneau, en amont de la fente (32) formée dans le plan de travail.

7. Machine selon l'une quelconque des revendications 5 et 6, caractérisée par le fait que les moyens de pliage de la bordure comprennent une charnière de pliage (34) articulée sur le plan de travail, en aval de ladite fente (32).

8. Machine selon la revendication 7, caractérisée par le fait que les moyens d'application de pression comprennent une règle (38) apte à être placée au-dessus du plan de travail (22), en face de la charnière de pliage (34).

9. Machine selon l'une quelconque des revendications 5 et 6, caractérisée par le fait que les moyens de pliage de la bordure comprennent un guide de pliage (54) fixé au plan de travail (22) de façon à assurer un pliage progressif de la bordure lors de son avance sur le plan de travail.

10. Machine selon la revendication 9, caractérisée par le fait que les moyens de pliage comprennent de plus un galet de pliage (56) pressant la deuxième zone latérale adhésive (20a) de la bordure contre la face opposée du panneau (10) en aval du guide de pliage (54) et en amont d'un moyen d'enlèvement (58) du deuxième protecteur anti-adhésif.

11. Machine selon la revendication 10, caractérisée par le fait qu'elle comprend un galet de collage (60) pressant la deuxième zone latérale adhésive (20a) de la bordure (14) contre la face opposée du panneau (10), en aval du moyen d'enlèvement (58) du deuxième protecteur anti-adhésif.

12. Machine selon la revendication 11, caractérisée par le fait que des moyens de découpe (62) sont placés en aval du galet de collage (60).

13. Machine selon l'une quelconque des revendications 9 à 12, caractérisée par le fait que les moyens d'application de pression comprennent un patin presseur (38) placé au-dessus du plan de travail (22), le long du bord droit du panneau, et s'étendant vers l'aval jusqu'à proximité d'une extrémité aval du guide de pliage (54).

## Claims

1. Process for bonding an adhesive protective edging (14) to a straight edge of a multilayer panel (10), the edging (14) having a central, non-adhesive strip (18) and two lateral, adhesive zones (20a, 20b), said process comprising the following stages:
- bonding the first lateral, adhesive zone (20b) of the edging (14) to a first face of the panel, along the straight edge, by depositing said first face of the panel (10) on a working plane (22), unwinding the edging from a storage reel (28), removing a first anti-adhesive protector (30b) covering the first lateral, adhesive zone, bringing the latter between the working plane and the first face of the panel through a notch (32) formed in the straight edge (23) of the working plane (22) so that it is in contact with said first face along the straight edge of the panel and simultaneous advance of the panel and the first lateral, adhesive zone on the working plane,
- application of a pressure to the panel (10) along the straight edge,
- bending the edging (14) in such a way that the second adhesive, lateral zone (20a) of the latter, covered with a second anti-adhesive protector (30a) is bent onto the opposite face of the panel and
- removing the second anti-adhesive protector (30a) whilst maintaining a pressure on the panel, along the straight edge.

2. Process according to claim 1, characterized in that the straight edge of the panel (10) is guided during its advance on the working plane (22),

3. Process according to claim 1 or 2, characterized in that the bending of the edging (14) is performed after the cutting of its ends, the panel (10) being stationary on the working plane.

4. Process according to claim 1 or 2, characterized in that the bending of the edging (14) is performed progressively during the advance of the panel (10) on the working plane (22), following the bonding of the first lateral, adhesive zone.

5. Machine for bonding an adhesive protection edging (14) to a straight edge of a multilayer panel, the edging (14) having a non-adhesive, central strip (18) and two lateral, adhesive zones (20a, 20b), said machine comprising:
- a working plane (22) able to receive the panel,
- a reel (28) for storing the adhesive protective edging (14), placed below the working plane,
- a means for removing a first anti-adhesive protector (30b) covering the first lateral, adhesive zone (20b) of the edging on leaving the storage reel,
- a slit (32) formed in the working plane (22), for the passage of the first lateral zone on the working plane, at a location below a first face of the panel, along the straight edge,
- means (38) for applying pressure to the panel resting on the working plane, along the straight edge,
- means (34, 54) for bending the edging on the opposite face of the panel and
- a means for removing a second anti-adhesive protector (30a) covering the second, lateral, adhesive zone (20a) of the edging.

6. Machine according to claim 5, characterized in that it comprises a lateral guide (24) against which is placed the straight edge of the panel upstream of the slot (32) formed in the working plane.

7. Machine according to claim 5 or 6, characterized in that the edging bending means comprise a bending hinge (34) articulated on the working plane downstream of said slot (32).

8. Machine according to claim 7, characterized in that the pressure application means comprise a rule (38) which can be placed above the working plane (22) in front of the bending hinge (34).

9. Machine according to claim 5 or 6, characterized in that the edging bending means comprise a bending guide (54) fixed to the working plane (22) so as to ensure a progressive bending of the edging during its advance on the working plane.

10. Machine according to claim 9, characterized in that the bending means also comprise a bending roller (56) pressing the second lateral, adhesive zone (20a) of the edging against the opposite face of the panel (10) downstream of the bending guide (54) and upstream of a means (58) for removing the second anti-adhesive protector.

11. Machine according to claim 10, characterized in that it comprises a bonding roller (60) pressing the second lateral, adhesive zone (20a) of the edging (14) against the opposite face of the panel (10) downstream of the means (58) for removing the second anti-adhesive protector.

12. Machine according to claim 11, characterized in that the cutting means (62) are positioned downstream of the bonding roller (60).

13. Machine according to any one of the claims 9 to 12, characterized in that the pressure application means comprise a pressing block (38) placed above the working plane (22), along the straight edge of the panel and extending downstream to the vicinity of a downstream end of the bending guide (54).

## Patentansprüche

1. Verfahren zum Verkleben eines Kantenschutzklebebandes (14) auf dem Rand einer mehrschichtigen Verbundplatte (10), wobei das Band (14) einen zentralen nichtklebenden Streifen (18) und zwei seitliche Klebezonen (20a, 20b) umfaßt, wobei das Verfahren die folgenden Abschnitte umfaßt:
- Kleben der ersten seitlichen Klebezone (20b) des Bandes (14) auf eine erste Seite der Platte, entlang der Kante, durch das Absetzen der ersten Seite der Platte (10) auf einer Arbeitsfläche (22), Abrollen des Bandes mittels einer Lagerspule (28), abheben eines ersten Klebeschutzes (30b), der den ersten seitlichen Klebebereich bedeckt, dem letzteren zugeführt zwischen der Arbeitsfläche und der ersten Fläche der Platte, über eine Nut (32), die in der Kante (23) der Arbeitsfläche (22) ausgebildet ist, so daß er entlang der Kante der Platte in Kontakt mit der ersten Fläche ist und gleichzeitig von der Platte und der ersten seitlichen Klebezone über die Arbeitsfläche fortschreitet;
- Aufbringen eines Druckes auf die Platte (10), entlang der Kante;
- Falten des Bandes (14) auf eine Weise, daß die zweite, seitliche Klebezone (20a) des letzteren, die mit einem zweiten Klebeschutz (30a) bedeckt ist, auf die gegenüberliegende Seite der Platte kommt; und
- Abheben des zweiten Klebeschutzes (30a) unter Aufrechterhaltung eines Druckes auf die Platte, entlang der Kante.

2. Verfahren nach Anspruch 1, **dadurch gekennzeichnet, daß** die Kante der Platte (10) während ihrer Bewegung über die Arbeitsfläche (22) geführt ist.

3. Verfahren nach einem der Ansprüche 1 oder 2, **dadurch gekennzeichnet, daß** die Faltung des Bandes (14) nach dem Abschneider seiner Enden erfolgt, wobei die Platte auf der Arbeitsfläche (10) stillsteht.

4. Verfahren nach einem der Ansprüche 1 oder 2, **dadurch gekennzeichnet, daß** die Faltung des Bandes (14) nach und nach während der Bewegung der Platte (10) über die Arbeitsfläche (22) erfolgt, nach dem Kleben der ersten seitlichen Klebezone (20b).

5. Maschine für das Kleben eines Kantenschutzklebebandes (14) auf dem Rand einer mehrschichtigen Verbundplatte (10), wobei das Band (14) einen zentralen nichtklebenden Streifen (18) und zwei seitliche Klebezonen (20a, 20b) umfaßt, wobei die Maschine umfaßt:
- eine Arbeitsfläche (22) zur Aufnahme der Platte;
- eine Lagerspule (28) des Schutzklebebandes (14), angeordnet unterhalb der Arbeitsfläche;
- Abhebeeinrichtung eines ersten Klebeschutzes (30b), der die erste, seitliche Klebezone (20b) des Bandes bedeckt, am Ausgang der Lagerspule;
- Ein Fenster (32), welches in der Arbeitsfläche (22) ausgebildet ist, zum Durchtritt der ersten seitlichen Zone auf die Arbeitsfläche, an einem Ort, der unter einer ersten Fläche der Platte, entlang der Platte angeordnet ist;
- Einrichtungen (38) zum Aufbringen eines Druckes auf die Platte, die auf der Arbeitsfläche ruht, entlang der Kante;
- Einrichtungen zum Falten (34, 54) des Bandes auf die gegenüberliegende Seite der Platte; und
- Eine Abhebeeinrichtung eines zweiten Klebeschutzes (30b), der die zweite, seitliche Klebezone (20b) des Bandes bedeckt.

6. Maschine nach Anspruch 5, **dadurch gekennzeichnet, daß** sie eine seitliche Führung (24) umfaßt, gegen die die Kante der Platte anliegt, oberhalb des Fensters (32), welches in der Arbeitsfläche ausgebildet ist.

7. Maschine nach einem der Ansprüche 5 oder 6, **dadurch gekennzeichnet**, **daß** die Einrichtung zum Falten des Bandes ein Faltscharnier (34) umfaßt, welches auf der Arbeitsfläche unterhalb des Fensters (32) angelenkt ist.

8. Maschine nach Anspruch 7, **dadurch gekennzeichnet, daß** die Einrichtung zum Aufbringen eines Druckes ein Lineal (38) umfaßt, welches auf der Arbeitsfläche (22) gegenüber dem Faltscharnier (34) angeordnet werden kann.

9. Maschine nach einem der Ansprüche 5 und 6, **dadurch gekennzeichnet, daß** die Einrichtung zum Falten des Bandes eine Faltführung (54) umfaßt, die auf der Arbeitsfläche (22) auf eine Weise angebracht ist, um eine fortschreitende Faltung des Bandes während seiner Bewegung über die Arbeitsfläche sicherzustellen.

10. Maschine nach Anspruch, **dadurch gekennzeichnet, daß** die Einrichtung zum Falten zusätzlich eine Faltrolle (56) umfaßt, welche die zweite, seitliche Klebezone (20a) des Bandes gegen die gegenüberliegende Seite der Platte (10) preßt, gegenüber der Faltführung (54) und oberhalb einer Abhebeeinrichtung (58) des zweiten Klebeschutzes.

11. Maschine nach Anspruch 10, **dadurch gekennzeichnet, daß** sie eine Kleberolle (60) umfaßt, welche die zweite, seitliche Klebezone (20a) des Bandes (14) gegen die gegenüberliegende Seite der Platte (10) preßt, unterhalb der Abhebeeinrichtung (58) des zweiten Klebeschutzes.

12. Maschine nach Anspruch 11, **dadurch gekennzeichnet, daß** unterhalb der Kleberolle (60) Einrichtungen zum Schneiden (62) angeordnet sind.

13. Maschine nach einem der Ansprüche 9 bis 12, **dadurch gekennzeichnet, daß** die Einrichtungen zum Aufbringen des Druckes eine Preßgleitschuh (38) umfassen, der auf der Arbeitsfläche (22), entlang der Kante der Platte angeordnet ist, und sich in Bewegungsrichtung bis in die Nähe eines unteren Endes der Faltführung (54) erstreckt.
